# EUROPÄISCHE PATENTSCHRIFT

(11) **EP 2 399 309 B1**
(45) Veröffentlichungstag und Bekanntmachung des Hinweises auf die Patenterteilung: **05.06.2013**
(21) Anmeldenummer: 10708744.7
(22) Anmeldetag: 19.02.2010
(51) Int. Cl.: H01M 2/10, H01M 2/12, H01M 10/42, H01M 10/50

(54) **ELEKTRISCHE ENERGIESPEICHEREINHEIT FÜR KRAFTFAHRZEUGE**
ELECTRICAL POWER STORAGE UNIT FOR MOTOR VEHICLES
UNITÉ D'ACCUMULATION D'ÉNERGIE ÉLECTRIQUE POUR VÉHICULES AUTOMOBILES

(30) Priorität: 19.02.2009 DE 102009009700
(43) Veröffentlichungstag der Anmeldung: 28.12.2011
(60) Teilanmeldung: 13155668.0
(73) Patentinhaber: MAGNA STEYR Battery Systems GmbH & Co OG, 8041 Graz (AT)
(72) Erfinder: HEIDENBAUER, Oliver, A-8580 Köflach (AT)
(74) Vertreter: Rausch, Gabriele
(86) Internationale Anmeldenummer: PCT/EP2010/052169
(87) Internationale Veröffentlichungsnummer: WO 2010/094788

(56) Entgegenhaltungen:
- EP-A1- 1 850 407
- EP-A1- 1 916 727
- US-A- 6 094 927

## Beschreibung

Die vorliegende Erfindung betrifft eine elektrische Energiespeichereinheit für Kraftfahrzeuge, mit einem Gehäuse, das in einem ersten Gehäuseabschnitt ein elektrisches Batteriezellenpack welches Hochspannung führt und in einem davon abgetrennten und gesondert öffenbaren zweiten Gehäuseabschnitt eine elektrische Schaltung hiefür enthält.

Eine Energiespeichereinheit dieser Art ist aus der US 2007/0284167 A1 bekannt und wird bei Kraftfahrzeugen mit hohem elektrischen Energiebedarf eingesetzt, wie Elektro-, Hybrid-oder Brennstoffzellen-Fahrzeugen. Um für Reparaturzwecke einen raschen Zugang zur elektrischen Schaltung zu erhalten, ohne daß die Gefahr eines elektrischen Schlags durch das hochspannungsführende Batteriezellenpack besteht, ist der erste Gehäuseabschnitt mit einer unlösbaren und der zweite Gehäuseabschnitt mit einer abschraubbaren Abdeckung versehen. Diese Konstruktion verhindert zwar ein unbeabsichtigtes Berühren des Batteriezellenpacks, nicht jedoch ein unbeabsichtigtes Berühren einzelner Komponenten der elektrischen Schaltung.

Eine Energiespeichereinheit ist weiters aus der EP 1 916 727 A1 bekannt. Diese Energiespeichereinheit umfasst eine Batterie und ein Batteriegehäuse, wobei im Batteriegehäuse die Batterie und eine Vorrichtung untergebracht sind. Das Batteriegehäuse besteht aus einem unteren und einem oberen Gehäuse.

Aus der US 6 094 927 A ist ein Fahrzeug mit Batterien bekannt, wobei die Batterien in einem hinteren Abschnitt eines Batteriegehäuses untergebracht sind und in einem vorderen Abschnitt des Batteriegehäuses eine elektrische Komponente untergebracht ist.

Die Erfindung setzt sich zum Ziel, eine Energiespeichereinheit mit verbesserter Sicherheit für Reparatur- und Wartungsarbeiten zu schaffen.

Dieses Ziel wird mit einer elektrischen Energiespeichereinheit der einleitend genannten Art erreicht, die sich gemäß der Erfindung dadurch auszeichnet, daß der zweite Gehäuseabschnitt zumindest einen abgesonderten und selbständig öffenbaren Wartungsbereich hat, welcher - mit Ausnahme einer optionalen berührungsgeschützten Hochspannungssicherung - keine elektrischen Schaltungskomponenten enthält, die oberhalb einer Niederspannungsgrenze von 60 V DC arbeiten.

Die Erfindung schafft damit ein neuartiges Sicherheitskonzept, das auf einer Unterteilung der Energiespeichereinheit in verschiedene Sicherheitsniveaus für unterschiedliche Reparatur- bzw. Wartungsstufen ("service levels") beruht: Das unterste Sicherheitsniveau ist der Wartungsbereich, in dem nur Baugruppen liegen, die unter eine Schutzkleinspannungsgrenze fallen, so daß Arbeiten daran von Servicepersonal ohne besondere Hochspannungsschulung vorgenommen werden können. Das mittlere Sicherheitsniveau wird durch den zweiten Gehäuseabschnitt exklusive seiner Wartungsbereiche gebildet und kann Baugruppen enthalten, die reparier- und austauschbar sein sollen, jedoch nicht mehr unter eine Schutzkleinspannungsgrenze fallen, so daß Reparatur- und Wartungsarbeiten nur mehr von Personal mit entsprechender Hochspannungsschulung ausgeführt werden dürfen. Das höchste Sicherheitsniveau stellt der Gehäuseabschnitt mit dem Batteriezellenpack dar, welches nicht nur Hochspannung führt, sondern auch Bestandteile enthält, die nur mehr im Werk unter Einhaltung von Umwelt- und Gesundheitsschutzvorschriften manipuliert werden dürfen.

Die Wartungsdeckeln des ersten Sicherheitsniveaus werden zweckmäßigerweise mit besonders einfachen Befestigungsmitteln wie Schnellverschlüssen oder Verschraubungen, die mit weit verbreiteten Werkzeugen geöffnet werden können, befestigt, wogegen für den Reparaturdeckel des zweiten Sicherheitsniveaus komplizierter zu öffnende Befestigungsmitteln vorgesehen werden, z.B. Spezialschrauben, die ein spezielles Öffnungswerkzeug erfordern.

Gemäß einer bevorzugten Ausführungsform der Erfindung enthält zumindest einer der genannten Wartungsbereiche zumindest eine Fluidschaltungskomponente für das Batteriezellenpack. Dabei kann es sich sowohl um Komponenten für die Versorgung des Batteriezellenpacks mit flüssigem oder gasförmigem Kühlmittel als auch um Komponenten zum Druckausgleich des Batteriezellenpacks handeln.

Besonders vorteilhaft ist es, wenn die Fluid- bzw. elektrischen Schaltungskomponenten in dem bzw. den Wartungsbereich(en) austauschbar montiert sind, um ihren Ersatz im untersten Sicherheitsniveau zu vereinfachen.

Eine weitere bevorzugte Ausführungsform der Erfindung zeichnet sich dadurch aus, daß der zweite Gehäuseabschnitt über zumindest einen Reparaturdeckel und zumindest einer der genannten Wartungsbereiche über einen im Reparaturdeckel ausgebildeten gesonderten Wartungsdeckel öffenbar ist. Dies erübrigt das gesonderte Entfernen der Wartungsdeckel für Personal, das für den Zugriff zum Reparaturdeckel des mittleren Sicherheitsniveaus berechtigt und ausgerüstet ist.

Besonders günstig ist es, wenn zumindest eine Fluid- bzw. elektrische Schaltungskomponente an einem der Wartungsdeckel gelagert ist. Dadurch wird der Austausch der Komponenten noch weiter erleichtert.

Bevorzugt wird die optionale Hochspannungssicherung an einem der Wartungs- oder Reparaturdeckel gelagert, und zwar so, daß sie beim Entfernen desselben berührungsgefährdete Hochspannung im zweiten Gehäuseabschnitt unterbricht. Dies verhindert Bedienungsfehler und erhöht die Sicherheit noch weiter.

In einer weiteren bevorzugten Ausführungsform der Erfindung ist zumindest eine Fluidschaltungskomponente eine Kühlmittelpumpe, ein Kühlmittelfilter oder ein Kühlmittelsensor für das Batteriezellenpack, welche Baugruppen somit für einen Wartungstausch leicht zugänglich sind.

Alternativ ist bevorzugt zumindest eine Fluidschaltungskomponente eine hygroskopische Komponente, z.B. ein Granulat zur Aufnahme von Luftfeuchtigkeit. Hygroskopische Komponenten bedürfen eines regelmäßigen Austauschs und sind daher für die Anordnung im untersten Sicherheitsniveau besonders geeignet.

Aus denselben Gründen ist es besonders vorteilhaft, wenn zumindest eine Fluidschaltungskomponenten ein Luftfilter ist, über welchen der erste Gehäuseabschnitt mit dem Freien in Druckausgleichsverbindung steht, um das Batteriezellenpack gefiltert zu be- und entlüften. Dabei sind bevorzugt der erste und der zweite Gehäuseabschnitt über einen Luftkanal verbunden und der Luftfilter führt vom zweiten Gehäuseabschnitt ausgehend zum Freien, was einen besonders einfachen Austausch des Luftfilters ermöglicht.

Die Erfindung wird nachstehend anhand eines in den beigeschlossenen Zeichnungen dargestellten Ausführungsbeispieles näher erläutert. In den Zeichnungen zeigt
Fig. 1 die elektrische Energiespeichereinheit der Erfindung in geschlossenem Zustand in einer Perspektivansicht;
Fig. 2 die Energiespeichereinheit von Fig. 1 mit abgenommenen Wartungs- und Reparaturdeckeln in einer Perspektivansicht;
Fig. 3 die Energiespeichereinheit von Fig. 1 nach Entfernen der Reparatur und Wartungsdeckel mit zerlegtem Gehäuse in einer Perspektivansicht; und
Fig. 4 die Anordnung des Luftfilters und der hygroskopischen Komponente an einem Wartungsdeckel in einer ausschnittsweisen Perspektivansicht.

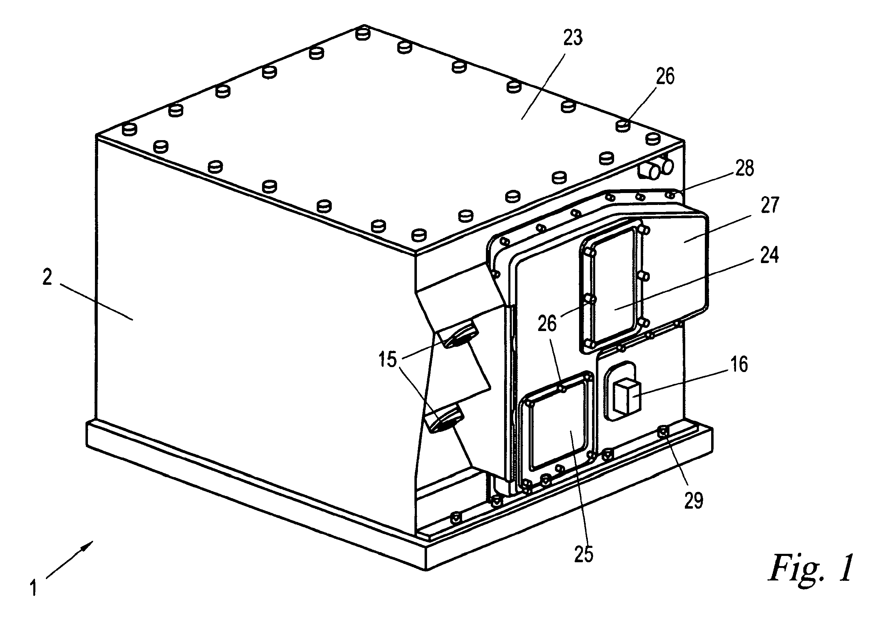

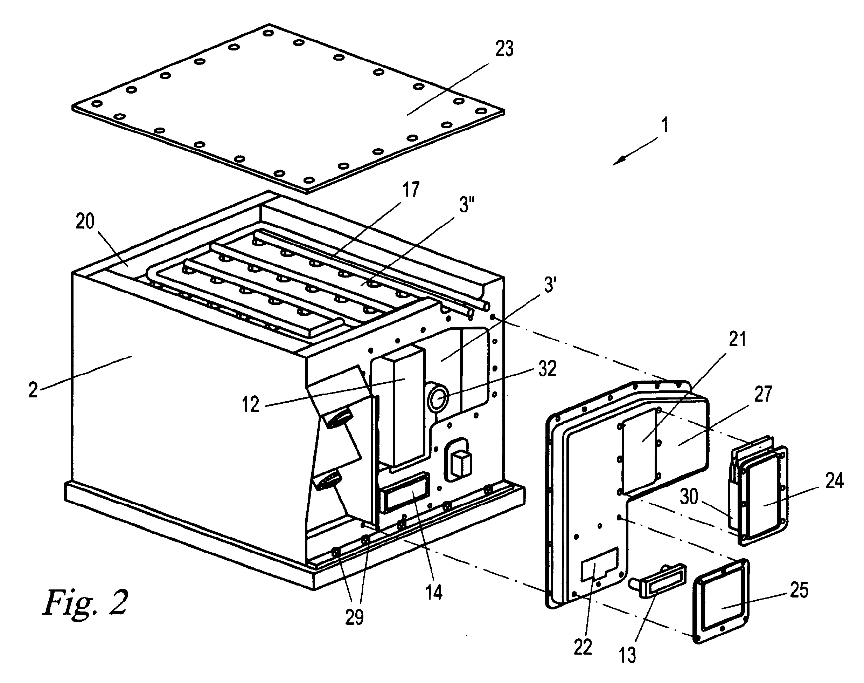

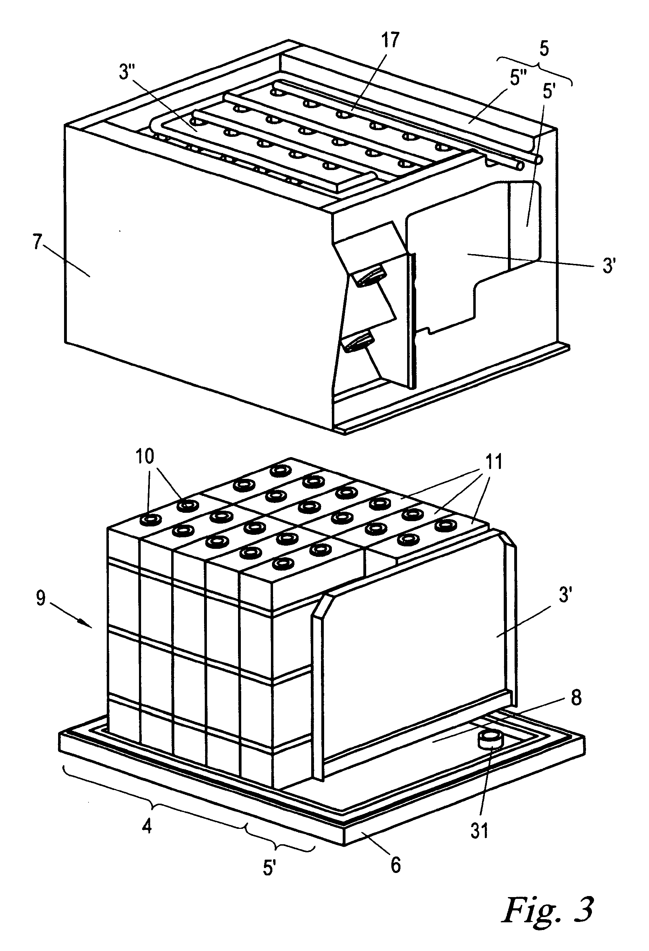

Unter Bezugnahme auf die Fig. 1 bis 3 ist eine elektrische Energiespeichereinheit 1 mit einem Gehäuse 2 gezeigt. Das Gehäuse 2 ist durch eine vertikale erste Trennwand 3' und eine daran winkelmäßig anschließende horizontale zweite Trennwand 3" in einen ersten Gehäuseabschnitt 4 und einen diesen vorder-und oberseitig umgebenden zweiten Gehäuseabschnitt 5 unterteilt.

Das Gehäuse 2 umfaßt eine Bodenplatte 6 und eine darauf aufsitzende Kastenhaube 7, in welche die Trennwände 3', 3" eingesetzt sind. Die erste Trennwand 3' hält nach dem Zusammenbau des Gehäuses 2 einen Abstandspalt 8 zum Boden 6, der einen Druckausgleichskanal zwischen dem ersten Gehäuseabschnitt 4 und dem zweiten Gehäuseabschnitt 5 errichtet. Die zweite Trennwand 3" ist über die erste Trennwand 3' vorgezogen und unterteilt so den zweiten Gehäuseabschnitt 5 in eine vordere Kammer 5' und eine obere Kammer 5".

Der erste Gehäuseabschnitt 4 enthält ein elektrisches Batteriezellenpack 9, z.B. in Form eines Verbunds aus Lithiumionen- oder Nickel-Metallhydrid-Zellen, die von Kühlmittelleitungen 10 durchsetzt und zu Modulen 11 zusammengefaßt sind.

Der zweite Gehäuseabschnitt 5 nimmt sowohl eine elektrische Schaltung als auch eine Fluidschaltung für das Batteriezellenpack 9 auf. Die elektrische Schaltung umfaßt beispielsweise eine Hochspannungs-Leistungsschalteinheit 12, zugehörige Hochspannungsverkabelungen, Leistungssteckverbinder, Sensorikleitungssätze und Steuergeräte (nicht gezeigt), sowie eine Hochspannungssicherung 13 in einem Stecksockel 14. Durch Abziehen der Hochspannungssicherung 13 können berührungsgefährdete hochspannungsführende Komponenten der elektrischen Schaltung spannungslos gemacht werden. Die Hochspannungssicherung 13 ist berührungsgeschützt ausgeführt, sodaß beim Abziehen und Einstecken in den Stecksockel 14 für den Benutzer keine Gefahr eines elektrischen Schlages besteht. Hochspannungs-Energieanschlüsse 15 und Niederspannungs-Steuerungsanschlüsse 16 sind aus dem Gehäuse 2 herausgeführt, um die Energiespeichereinheit 1 entsprechend mit dem Fahrzeug verbinden zu können.

Beispielhafte Fluidschaltungskomponenten für die Fluidschaltung im zweiten Gehäuseabschnitt 5 umfassen ein Verzweigungsvielfach 17 zur Zu- und Abfuhr von flüssigem Kühlmittel zu und von den Kühlmittelleitungen 10, optionale zugehörige Kühlmittelpumpen, Kühlmitteltemperaturfühler und Kühlmittelfilter (nicht gezeigt), sowie einen Luftfilter 18 und eine hygroskopische Komponente 19 zur Be- und Entlüftung und Luftaufbereitung der Gehäuseabschnitte 4, 5.

Um die erörterten Sicherheitsniveaus einzurichten, werden die elektrischen Komponenten und Fluidschaltungskomponenten wie folgt angeordnet.

Diejenigen Komponenten, welche gefahrlos bzw. ohne spezielle Hochspannungsschulung repariert, gewartet oder ausgetauscht werden können, werden in abgesonderten eigenen Wartungsbereichen 20, 21, 22 des zweiten Gehäuseabschnitts 5 angeordnet. Die Wartungsbereiche 20 - 22 sind im gezeigten Beispiel auf die Kammern 5', 5" des zweiten Gehäuseabteils 5 verteilt. Die Wartungsbereiche 20 - 22 sind mit eigenen Wartungsdeckeln 23 - 25 ausgestattet, welche mit einfach zu öffnenden Befestigungsmitteln, z.B. herkömmlichen Schrauben 26, befestigt sind.

Die Wartungsbereiche 20 - 22 enthalten insbesondere - mit Ausnahme der berührungsgeschützt ausgeführten Hochspannungssicherung 13 - keine elektrischen Schaltungskomponenten, die oberhalb einer vorgegebenen Niederspannungsgrenze arbeiten, welche bevorzugt eine Schutzkleinspannungsgrenze in der Größenordnung von 60 V DC ist. Dadurch bilden die Wartungsbereiche 20 - 22 des zweiten Gehäuseabschnitts 5 ein erstes bzw. unterstes Sicherheitsniveau, welches gefahrlos und ohne Hochspannungsschulung geöffnet werden kann, und zwar durch Entfernen der Wartungsdeckel 23 - 25.

Das Anordnen der optionalen Hochspannungssicherung 13 im ersten Sicherheitsniveau hat den Vorteil, daß bereits durch Zugang zum ersten Sicherheitsniveau die gesamte Energiespeichereinheit 1 berührungsspannungsfrei gemacht werden kann. Die Hochspannungssicherung 13 kann direkt am Wartungsdeckel 25 befestigt sein, sodaß sie gemeinsam mit diesem entfernbar ist.

In den im zweiten Gehäuseabschnitt 5 nach Abzug der Wartungsbereiche 22 - 24 verbleibenden Bereichen können Schaltungskomponenten mit einer Betriebsspannung über der vorgenannten Niederspannungsgrenze vorliegen, im gezeigten Beispiel die Hochspannungs-Leistungsschalteinheit 12 und ihre Peripheriekomponenten. Der zweite Gehäuseabschnitt 5 exklusive der Wartungsbereiche 20 - 22 bildet somit das zweite, mittlere Sicherheitsniveau, welches nur von hochspannungsgeschultem Fachpersonal geöffnet werden darf, und ist zu diesem Zweck mit zumindest einem Reparaturdeckel 27 versehen, welcher mit speziellen Schrauben 28 verschlossen ist, die ein spezielles Öffnungswerkzeug erfordern.

Bevorzugt sind einige der Wartungsdeckel 22 - 25 des ersten Sicherheitsniveaus, hier die Wartungsdeckel 24 und 25, gleich direkt in einem Reparaturdeckel 27 ausgebildet, sodaß sie vom Fachpersonal des zweiten Sicherheitsniveaus gemeinsam mit dem (bzw. den) Reparaturdeckel(n) 27 entfernt werden können. Darüber hinaus hat die Anordnung der Wartungsdeckel 24, 25 im Reparaturdeckel 27 den Vorteil, daß Komponenten des ersten Sicherheitsniveaus unmittelbar neben Komponenten des zweiten Sicherheitsniveaus angeordnet werden können, beispielsweise durch gemeinsame Montage auf der Trennwand 3'.

Nach dem Öffnen der ersten und zweiten Sicherheitsniveaus verbleibt der von Bodenplatte 6, Gehäusehaube 7 und Trennwänden 3', 3" umgebene erste Gehäuseabschnitt 4 als drittes, höchstes Sicherheitsniveau, welches ausschließlich für werkseitige Reparatur- oder Recyclingmaßnahmen geöffnet werden darf. Um Zugang zum dritten Sicherheitsniveau zu erhalten, müssen beispielsweise nicht-zerstörungsfrei öffenbare Befestigungsmittel, wie Nieten 29, zwischen Gehäusehaube 7 und Gehäuseboden 6 entfernt werden.

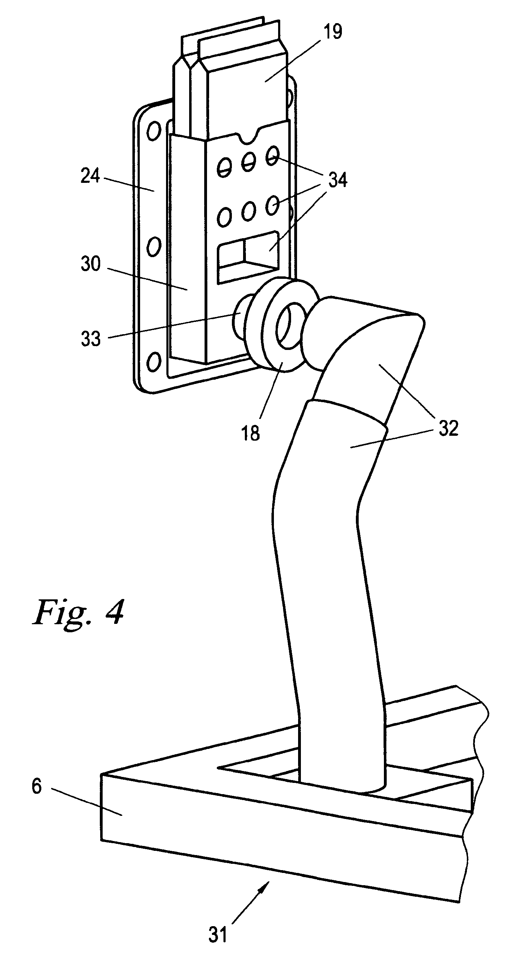

Fig. 4 zeigt den Luftfilter 18 und die hygroskopische Komponente 19 des Wartungsbereichs 21 im Detail. Die hygroskopische Komponente 19 ist ein mit hygroskopischem Material, z.B. Silicagel oder -granulat, gefülltes Säckchen aus luftdurchlässigem Material ("Trocknungssäckchen") und in eine Halterung 30 des Wartungsdeckels 24 eingeschoben, sodaß sie gemeinsam mit dem Wartungsdeckel 24 aus dem Gehäuse 2 entnommen werden kann.

Auch der Luftfilter 18 ist austauschbar an der Halterung 30 gelagert und steht einerseits über einen zu einer Öffnung 31 im Boden 6 führenden Schlauch 32 mit dem Freien und anderseits über Öffnungen 33, 34 in der Halterung 30 mit dem zweiten Gehäuseabschnitt 5 und von dort über den Abstandsspalt 8 auch mit dem ersten Gehäuseabschnitt 4 in Verbindung. Dadurch kann ein Druckausgleich sowohl vom Inneren des ersten als auch des zweiten Gehäuseabschnitts 4, 5 über die Öffnungen 34, die hygroskopische Komponente 19, den Luftfilter 18, den Schlauch 32 und die Öffnung 31 zum Freien erfolgen.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Elektrische Energiespeichereinheit (1) für Kraftfahrzeuge, mit einem Gehäuse (2), das in einem ersten Gehäuseabschnitt (4) ein elektrisches Batteriezellenpack (9) welches Hochspannung führt, und in einem davon abgetrennten und gesondert öffenbaren zweiten Gehäuseabschnitt (5) eine elektrische Schaltung hiefür enthält, **dadurch gekennzeichnet, daß** der zweite Gehäuseabschnitt (5) zumindest einen abgesonderten und selbständig öffenbaren Wartungsbereich (20 - 22) hat, welcher - mit Ausnahme einer optionalen berührungsgeschützten Hochspannungssicherung (13) - keine elektrischen Schaltungskomponenten enthält, die oberhalb einer Niederspannungsgrenze von 60 V DC arbeiten.

2. Energiespeichereinheit nach Anspruch 1, **dadurch gekennzeichnet, daß** zumindest einer der genannten Wartungsbereiche (20 - 22) zumindest eine Fluidschaltungskomponente (17 - 19) für das Batteriezellenpack (9) enthält.

3. Energiespeichereinheit nach Anspruch 1 oder 2, **dadurch gekennzeichnet, daß** die Fluid- bzw. elektrischen Schaltungskomponenten (13, 18, 19) in dem bzw. den Wartungsbereich(en) (21, 22) austauschbar montiert sind.

4. Energiespeichereinheit nach einem der Ansprüche 1 bis 3, **dadurch gekennzeichnet, daß** der zweite Gehäuseabschnitt über zumindest einen Reparaturdeckel (27) und zumindest einer der genannten Wartungsbereiche (21, 22) über einen im Reparaturdeckel (27) ausgebildeten gesonderten Wartungsdeckel (24, 25) öffenbar ist.

5. Energiespeichereinheit nach Anspruch 4, **dadurch gekennzeichnet, daß** zumindest eine Fluid- bzw. elektrische Schaltungskomponente (13, 18, 19) an einem der Wartungsdeckel (24, 25) gelagert ist.

6. Energiespeichereinheit nach Anspruch 4 oder 5, **dadurch gekennzeichnet, daß** die optionale Hochspannungssicherung (13) an einem der Wartungs- oder Reparaturdeckel (25, 27) gelagert ist und beim Entfernen desselben jedwede Hochspannung im zweiten Gehäuseabschnitt (5) unterbricht.

7. Energiespeichereinheit nach einem der Ansprüche 2 bis 6, **dadurch gekennzeichnet, daß** zumindest eine Fluidschaltungskomponente eine Kühlmittelpumpe, ein Kühlmittelfilter oder ein Kühlmittelsensor für das Batteriezellenpack (9) ist.

8. Energiespeichereinheit nach einem der Ansprüche 2 bis 7, **dadurch gekennzeichnet, daß** zumindest eine Fluidschaltungskomponente eine hygroskopische Komponente (19) ist.

9. Energiespeichereinheit nach einem der Ansprüche 2 bis 8, **dadurch gekennzeichnet, daß** zumindest eine Fluidschaltungskomponenten ein Luftfilter (18) ist, über welchen der erste Gehäuseabschnitt (4) mit dem Freien in Druckausgleichsverbindung steht.

10. Energiespeichereinheit nach Anspruch 9, **dadurch gekennzeichnet, daß** der erste und der zweite Gehäuseabschnitt (4, 5) über einen Luftkanal (8) verbunden sind und der Luftfilter (18) vom zweiten Gehäuseabschnitt (5) ausgehend zum Freien führt.

## Claims

1. Electrical power storage unit (1) for motor vehicles, having a housing (2) which contains, in a first housing section (4), an electric battery cell pack (9) which conducts high voltage, and an electrical circuit therefor in a second housing section (5) which is separated from said first housing section (4) and can be opened separately therefrom, **characterized in that** the second housing section (5) has at least one separate maintenance area (20-22) which can be opened independently and which contains - with the exception of an optional touch-sensitive high voltage fuse (13) - no electrical switching components which operate above a low voltage limit of 60 V DC.

2. Power storage unit according to Claim 1, **characterized in that** at least one of the specified maintenance areas (20-22) contains at least one fluid circuit component (17-19) for the battery cell pack (9).

3. Power storage unit according to Claim 1 or 2, **characterized in that** the fluid and/or electrical circuit components (13, 18, 19) are mounted in an exchangeable fashion in the maintenance area or areas (21, 22).

4. Power storage unit according to one of Claims 1 to 3, **characterized in that** the second housing section can be opened by means of at least one repair lid (27), and at least one of the specified maintenance areas (21, 22) can be opened by means of a separate maintenance lid (24, 25) which is formed in the repair lid (27).

5. Power storage unit according to Claim 4, **characterized in that** at least one fluid and/or electrical circuit component (13, 18, 19) is mounted on one of the maintenance lids (24, 25).

6. Power storage unit according to Claim 4 or 5, **characterized in that** the optional high voltage fuse (13) is mounted on one of the maintenance or repair lids (25, 27), and when the latter is removed said optional high voltage fuse (13) interrupts any high voltage in the second housing section (5).

7. Power storage unit according to one of Claims 2 to 6, **characterized in that** at least one fluid circuit component is a coolant pump, a coolant filter or a coolant sensor for the battery cell pack (9).

8. Power storage unit according to one of Claims 2 to 7, **characterized in that** at least one fluid circuit component is a hygroscopic component (19).

9. Power storage unit according to one of Claims 2 to 8, **characterized in that** at least one fluid circuit component is an air filter (18) via which the first housing section (4) is connected to the open air in a pressure equalizing connection.

10. Power storage unit according to Claim 9, **characterized in that** the first and second housing sections (4, 5) are connected via an air duct (8), and the air filter (18) leads from the second housing section (5) to the open air.

## Revendications

1. Unité d'accumulateur d'énergie électrique (1) pour véhicules automobiles, comprenant un boîtier (2) qui contient, dans une première portion de boîtier (4), un bloc de cellules de batterie électrique (9) qui conduit les hautes tensions, et dans une deuxième portion de boîtier (5) séparée de la première et pouvant être ouverte séparément, un circuit électrique pour celui-ci, **caractérisée en ce que** la deuxième portion de boîtier (5) présente au moins une région d'entretien (20 - 22) séparée et pouvant être ouverte de manière autonome, qui, à l'exception d'une sécurité optionnelle contre les hautes tensions (13) à protection contre le contact, ne contient aucun composant de circuit électrique fonctionnant au-dessus d'une limite de basse tension de 60 V CC.

2. Unité d'accumulateur d'énergie selon la revendication 1, **caractérisée en ce qu'**au moins l'une desdites régions d'entretien (20 - 22) contient au moins un composant de circuit fluide (17 - 19) pour le bloc de cellules de batterie (9).

3. Unité d'accumulateur d'énergie selon la revendication 1 ou 2, **caractérisée en ce que** les composants de circuit fluide ou électrique (13, 18, 19) sont montés de manière interchangeable dans la ou les régions d'entretien (21, 22).

4. Unité d'accumulateur d'énergie selon l'une quelconque des revendications 1 à 3, **caractérisée en ce que** la deuxième portion de boîtier peut être ouverte par le biais d'au moins un couvercle de réparation (27) et au moins l'une desdites régions d'entretien (21, 22) peut être ouverte par le biais d'un couvercle d'entretien séparé (24, 25) réalisé dans le couvercle de réparation (27).

5. Unité d'accumulateur d'énergie selon la revendication 4, **caractérisée en ce qu'**au moins un composant de circuit fluide ou électrique (13, 18, 19) est supporté sur l'un des couvercles d'entretien (24, 25).

6. Unité d'accumulateur d'énergie selon la revendication 4 ou 5, **caractérisée en ce que** la sécurité optionnelle contre les hautes tensions (13) est supportée sur l'un des couvercles d'entretien ou de réparation (25, 27) et en cas d'enlèvement de celui-ci, coupe la haute tension éventuelle dans la deuxième portion de boîtier (5).

7. Unité d'accumulateur d'énergie selon l'une quelconque des revendications 2 à 6, **caractérisée en ce qu'**au moins un composant de circuit fluide est une pompe à réfrigérant, un filtre à réfrigérant ou un capteur de réfrigérant pour le bloc de cellules de batterie (9).

8. Unité d'accumulateur d'énergie selon l'une quelconque des revendications 2 à 7, **caractérisée en ce qu'**au moins un composant de circuit fluide est un composant hygroscopique (19).

9. Unité d'accumulateur d'énergie selon l'une quelconque des revendications 2 à 8, **caractérisée en ce qu'**au moins un composant de circuit fluide est un filtre à air (18), par le biais duquel la première portion de boîtier (4) est en liaison d'équilibrage de pression avec l'air libre.

10. Unité d'accumulateur d'énergie selon la revendication 9, **caractérisée en ce que** la première et la deuxième portion de boîtier (4, 5) sont connectées par le biais d'un canal d'air (8) et le filtre à air (18) conduit depuis la deuxième portion de boîtier (5) jusqu'à l'air libre.
